# EUROPÄISCHE PATENTANMELDUNG

(11) **EP 4 600 015 A1**
(43) Veröffentlichungstag der Anmeldung: **13.08.2025**
(21) Anmeldenummer: 24214504.3
(22) Anmeldetag: 21.11.2024
(51) Int. Cl.: B29C 49/04, B29C 49/22, B29C 49/48, B65D 83/00

(54) **BEHÄLTER**

(30) Priorität: 09.02.2024 DE 102024103699
(71) Anmelder: Gaplast GmbH, 82442 Altenau (DE)
(72) Erfinder: Kneer, Stephan, 82490 Farchant (DE); Yilginc, Kasim, 82487 Oberammergau (DE)
(74) Vertreter: Flosdorff, Jürgen

(57) **Zusammenfassung**

Der Behälter, der aus einem steifen Außenbehälter und einem verformbaren Innenbeutel aus keine Schweißverbindung miteinander eingehenden thermoplastischen Kunststoffen besteht, wobei ein aus wenigstens zwei Schläuchen bestehender Vorformling koextrudiert und zwischen den geöffneten Hälften einer Blasform angeordnet wird und die Blasform geschlossen wird, wenn der Vorformling die zur Herstellung des Behälters erforderliche Länge hat, wobei Überschussmaterial des Bodenbereichs des herzustellenden Behälters abgequetscht und eine Quetschnaht aus verschweißtem Material des Außenbehälters ausgebildet wird, in der die verschweißte Bodennaht des Innenbeutels eingeklemmt und in axialer Richtung gehalten ist, und der Vorformling durch ein Druckmedium zur Anlage an die Wandung der Blasform aufgeblasen und nach Öffnen der Blasform entnommen wird, ist dadurch gekennzeichnet, dass die Quetschnaht am Boden des Behälters einen nichtlinearen Verlauf hat, wodurch die Quetschnaht länger ist als bei einem linearen Verlauf, und dass durch das Öffnen der Blasform winzige Luftschlitzöffnungen in der Naht des Außenbehälters ausgebildet sind, durch die Umgebungsluft in den Zwischenraum zwischen dem Innenbeutel und dem Außenbehälter zum Druckausgleich eintreten kann.

## Beschreibung

Die Erfindung betrifft einen Behälter, der aus einem steifen Außenbehälter und einem verformbaren Innenbeutel aus keine Schweißverbindung miteinander eingehenden thermoplastischen Kunststoffen besteht, mit einer Behälteröffnung, wobei ein aus wenigstens zwei Schläuchen bestehender Vorformling koextrudiert und zwischen den geöffneten Hälften einer Blasform angeordnet wird und die Blasform geschlossen wird, wenn der Vorformling die zur Herstellung des Behälters erforderliche Länge hat, wobei Überschlussmaterial im Bodenbereich des herzustellenden Behälters abgequetscht und eine Quetschnaht aus verschweißtem Material des Außenbehälters ausgebildet wird, in der die nicht verschweißte Bodennaht des Innenbeutels eingeklemmt und in axialer Richtung gehalten ist, und wobei der Vorformling durch ein Druckmedium zur Anlage an die Wandung der Blasform aufgeblasen und nach Öffnen der Blasform entnommen wird.

Die verschiedenartigen thermoplastischen Kunststoffe des Außenbehälters und des Innenbeutels gehen zwar keine Schweißverbindung miteinander ein, sie haften aber aneinander, wenn der Behälter in dem Koextrusionsverfahren hergestellt wird. Bevor ein derartiger Behälter verwendungsfähig ist, d.h. mit einem beispielsweise flüssigen oder pastösen Behälterinhalt gefüllt wird, der dann z.B. mittels einer Airlesspumpe oder durch Zusammendrücken des Behälters allmählich abgegeben wird, muss der Innenbeutel von der Wand des Außenbehälters abgelöst und dann wieder an diese angelegt werden. Dies kann z.B. dadurch erfolgen, dass durch die Behälteröffnung ein Unterdruck auf den Innenbeutel aufgebracht wird, der sich daraufhin zusammenzieht. Anschließend kann durch die Behälteröffnung Druckluft in den Innenbeutel eingeführt werden, um diesen wieder an den Außenbehälter anzulegen. Wenn der Innenbeutel sich bei dem vorstehend beschriebenen Ablösen von dem Außenbehälter zusammenzieht, muss in den Zwischenraum zwischen dem Außenbehälter und dem Innenbeutel Umgebungsluft zum Druckausgleich einströmen, damit sich der Innenbeutel zusammenziehen kann. Dasselbe ist bei der Abgabe von Behälterinhalt der Fall, wenn der Behälter in seine bestimmungsgemäße Benutzung genommen wird.

Um diesen Druckausgleich zu ermöglichen, ist es bekannt, Wandöffnungen in dem Außenbehälter auszubilden, wofür verschiedene Techniken entwickelt wurden, mit denen eine Verletzung des dünnen Innenbeutels vermieden wird. Diese Ausbildung von Wandöffnungen in dem Außenbehälter erfordert einen aufwändigen Arbeitsschritt bei der Herstellung des Behälters, der nicht nur die Herstellungszeit vergrößert, sondern sich auch in zusätzlichen Kosten widerspiegelt.

Der vorliegenden Erfindung liegt die Aufgabe zugrunde, einen Behälter der betrachteten Art so weiterzuentwickeln, dass er ohne die nachträgliche Ausbildung einer Wandöffnung in dem Außenbehälter gebrauchsfähig ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Der erfindungsgemäße Behälter hat eine verlängerte Quetschnaht am Boden. Diese Quetschnaht verläuft nicht geradlinig mittig durch den Bodenbereich des Behälters, wie dies bei den bisher bekannten Behältern dieser Art der Fall ist, sondern die Quetschnaht verläuft abwechselnd beidseitig der bisherigen geradlinigen Quetschnaht, die den Bodenbereich halbiert. Diese Quetschnaht kann wenigstens über einenTeil ihrer Erstreckung einen gezackten Verlauf haben, der bevorzugt wechselseitig der Mittellinie des Bodens des Behälters verläuft. Die Quetschnaht kann auch einen wellenförmigen Verlauf haben, der einer Sinuskurve entsprechen kann, oder auch stufenförmig seitlich alternierend verlaufen, bevorzugt über die gesamte Länge der Quetschnaht.

Durch den nicht-linearen Verlauf der Quetschnaht hat diese eine erheblich größere Länge, was aus dem nachfolgenden Grund bedeutsam ist. Die Anmelderin hat nämlich herausgefunden, dass sich infolge des Öffnens der Blasform winzige Luftschlitzöffnungen in der Naht des Außenbehälters ausbilden. Durch diese kapillaren Öffnungen strömt Umgebungsluft in den Zwischenraum zwischen dem sich zusammenziehenden Innenbeutel und dem Außenbehälter, wobei durch die Luftschlitzöffnungen ein vollständiger Druckausgleich in dem Zwischenraum erfolgt. Durch die sehr kleinen Luftschlitzöffnungen, die von der Außenseite des Behälters aus mit bloßem Auge kaum erkennbar sind, wird überraschenderweise der Unterdruck infolge der Abgabe von Behälterinhalt ausgeglichen, da wegen der erheblich größeren Länge der Quetschnaht ausreichend viele Luftschlitzöffnungen entstanden sind.

Die Luftschlitzöffnungen in der Quetschkante entstehen folgendermaßen:
Beim Schließen der Blasform quetscht diese den Bodenbereich des Vorformlings zusammen, wobei die Quetschkante der Blasform an dem heißen Vorformling anhaftet. Wenn die Blasform geöffnet wird, übt die sich öffnende Blasform eine Zugkraft auf die Quetschnaht aus, um sich von dem abgequetschten Vorformling zu lösen. Die Anmelderin hat herausgefunden, dass hierbei die Quetschnaht ein wenig auseinandergezogen wird, wodurch sich Luftschlitzöffnungen in Kapillargröße ausbilden. Denkbar ist, dass sich diese Wirkung beim Öffnen der Blasform durch den nicht-linearen Verlauf der Quetschnaht verstärkt, möglicherweise insbesondere an den scharfen Eckpunkten eines gezackten oder treppenförmigen Verlaufs der Quetschkante.

Damit entfällt das Erfordernis, in einem aufwändigen Bearbeitungsschritt Wandöffnungen in dem Außenbehälter auszubilden, die bisher bei Behältern der betrachteten Art vorgesehen sind.

Mit großem Vorteil kann vorgesehen sein, dass der Innenbeutel aus wenigstens zwei Schichten besteht und die an dem Außenbehälter anliegende Schicht im erhärteten Zustand eine raue Oberfläche mit mikroskopisch kleinen Erhebungen und Vertiefungen aufweist, so dass die Adhäsionskräfte zwischen dem Außenbehälter und dem Innenbeutel minimiert sind. Der Innenbeutel kann dabei bevorzugt aus einem Gemisch von EVOH und einem Kunststoff mit elastischen Eigenschaften bestehen. Der Materialanteil aus EVOH hat die Eigenschaft, beim Erstarren bzw. Erkalten die raue Oberfläche zu bilden, wobei dieses Material die weitere Eigenschaft einer verhältnismäßig großen Steifigkeit hat, so dass es für sich allein nicht für einen leicht verformbaren Innenbeutel geeignet ist. Aus diesem Grund wird der Materialanteil EVOH mit einem gleichmäßig verteilten Kunststoff mit elastischen Eigenschaften gemischt. Hierzu wird mit besonderem Vorteil lonomer verwendet, das in der dispersen Phase in dem EVOH vorliegt. Die Innenschicht des Innenbeutels kann aus LDPE bestehen, ohne dass diese Aufzählung abschließend ist.

Nach dem Öffnen der Blasform wird der Butzen unter der Quetschkante abgeschlagen, was dazu beiträgt, die Luftschlitzöffnungen an der Randkante zu öffnen. Danach kann der Behälter durch ein Klemmförderband transportiert werden, an dessen Förderbahn an einer Seite ein vertikales umlaufendes Förderband, das in der gleichen Richtung wie das umlaufende Förderband abläuft, und an der gegenüberliegenden Seite ein feststehendes vertikales Band angeordnet ist, wobei der Abstand zwischen dem umlaufenden vertikalen Förderband und feststehenden Band etwas kleiner als der Außendurchmesser der Behälter ist, so dass die Behälter beim Durchlauf zwischen dem umlaufenden vertikalen Förderband und dem feststehenden vertikalen Band um ihre vertikale Achse gedreht und dabei seitlich zusammen gedrückt werden, wobei sich die Innenbeutel schlagartig von den Außenbehältern ablösen. Eine solche Vorrichtung zum Ablösen zusammenfaltbarer Innenbeutel von den Innenwänden zugehöriger starrer Außenbehälter ist bekannt. Das Ablösen des Innenbeutels von dem Außenbehälter hat bei dieser Vorgehensweise den Vorteil, dass nur ein kleiner Zwischenraum beim Durchlaufen des Förderbandes in dem Zwischenraum zwischen dem ein wenig seitlich zusammengedrückten Innenbeutel und Außenbehälter entsteht, der problemlos durch die winzigen Luftschlitzöffnungen mit Umgebungsluft gefüllt wird.

Beim Gebrauch des Behälters und der allmählichen Abgabe von Behälterinhalt zieht sich der Innenbeutel allmählich sternförmig zusammen, wobei der Druckausgleich durch die Luftschlitzöffnungen der Bodennaht erfolgt.

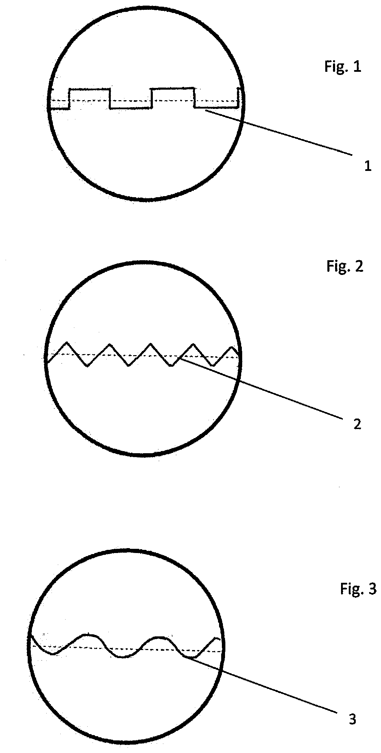

Die beigefügten Figuren 1 bis 3 zeigen eine stufenförmige Quetschnaht 1, eine gezackte Quetschnaht 2 und eine wellenförmige Quetschnaht 3 am Boden, die damit erheblich länger ist als eine geradlinige Bodennaht.

Die nicht lineare Quetschkante versteift die Bodenfläche, wobei sich die Mantelfläche als erstes ablöst.

## Patentansprüche

1. Behälter, der aus einem steifen Außenbehälter und einem verformbaren Innenbeutel aus keine Schweißverbindung miteinander eingehenden thermoplastischen Kunststoffen besteht, wobei ein aus wenigstens zwei Schläuchen bestehender Vorformling koextrudiert und zwischen den geöffneten Hälften einer Blasform angeordnet wird und die Blasform geschlossen wird, wenn der Vorformling die zur Herstellung des Behälters erforderliche Länge hat, wobei Überschussmaterial des Bodenbereichs des herzustellenden Behälters abgequetscht und eine Quetschnaht aus verschweißtem Material des Außenbehälters ausgebildet wird, in der die verschweißte Bodennaht des Innenbeutels eingeklemmt und in axialer Richtung gehalten ist, und der Vorformling durch ein Druckmedium zur Anlage an die Wandung der Blasform aufgeblasen und nach Öffnen der Blasform entnommen wird,
**dadurch gekennzeichnet,**
**dass** die Quetschnaht (1, 2, 3) am Boden des Behälters einen nicht-linearen Verlauf hat, wodurch die Quetschnaht (1, 2, 3) länger ist als bei einem linearen Verlauf, und
**dass** durch das Öffnen der Blasform winzige Luftschlitzöffnungen in der Naht des Außenbehälters ausgebildet sind, durch die Umgebungsluft in den Zwischenraum zwischen dem Innenbeutel und dem Außenbehälter zum Druckausgleich eintreten kann.

2. Behälter nach Anspruch 1,
**dadurch gekennzeichnet,**
**dass** die Quetschnaht (2) wenigstens über einen Teil ihrer Erstreckung einen gezackten Verlauf hat.

3. Behälter nach Anspruch 1,
**dadurch gekennzeichnet,**
**dass** die Quetschnaht (3) wenigstens über einen Teil ihrer Erstreckung einen wellenförmigen Verlauf hat.

4. Behälter nach Anspruch 1,
**dadurch gekennzeichnet,**
**dass** die Quetschnaht (1) wenigstens über einen Teil ihrer Erstreckung einen stufenförmigen Verlauf hat.

5. Behälter nach einem der Ansprüche 1 bis 4,
**dadurch gekennzeichnet,**
**dass** die Quetschnaht (1, 2, 3) über ihre gesamte Länge den nicht-linearen Verlauf hat.

6. Behälter nach einem der Ansprüche 1 bis 5,
**dadurch gekennzeichnet,**
**dass** der Behälter keine nachträglichen Druckausgleichsöffnungen in der Wand des Außenbehälters aufweist.

7. Behälter nach einem der Ansprüche 1 bis 6,
**dadurch gekennzeichnet,**
**dass** der Innenbeutel an der Außenseite eine raue Oberfläche hat.

8. Behälter nach Anspruch 7,
**dadurch gekennzeichnet,**
**dass** der Innenbeutel aus wenigstens zwei Schichten besteht und dass die Außenschicht aus einem Gemisch von EVOH mit einem elastischen Kunststoff besteht.
